# EUROPEAN PATENT APPLICATION

(11) **EP 4 803 585 A1**
(43) Date of publication of application: **09.09.2026**
(21) Application number: 24885786.4
(22) Date of filing: 30.10.2024
(51) Int. Cl.: C09D 105/04, B65D 65/42, C09D 7/61, C09D 7/63, C09D 107/00, D21H 19/10, D21H 19/12, D21H 19/82, D21H 21/28, D21H 27/10

(54) **OIL-RESISTANT COATING AGENT, OIL-RESISTANT COATING METHOD, OIL-RESISTANT PACKAGING MATERIAL, AND OIL-RESISTANT TABLEWARE**

(30) Priority: 02.11.2023 JP 2023188865
(71) Applicant: The Pack Corporation, Osaka City, Osaka 537-8911 (JP)
(72) Inventor: HORIKAWA Takuya, Tokyo 151-0063 (JP); KONISHI Tomoyoshi, Osaka City, Osaka 537-8911 (JP); SAZANAMI Daisuke, Nishinomiya-shi, Hyogo 662-0863 (JP)
(74) Representative: Papula Oy
(86) International application number: PCT/JP2024/038768
(87) International publication number: WO 2025/095019

(57) **Abstract**

The present invention provides: an oil-resistant coating agent which exhibits excellent oil resistance and is obtained using mainly naturally derived materials that do not include petroleum-based materials or resin materials obtained using petroleum-based materials; an oil-resistant coating method in which said oil-resistant coating agent is used; an oil-resistant packaging material; and oil-resistant tableware.

Provided is an oil-resistant coating agent of two-component type, the agent comprising: a main agent containing at least an alginate; and a secondary agent containing at least a polyvalent metal salt and xanthan gum. Provided is an oil-resistant coating method that includes: a main agent coating step for coating the main agent containing at least an alginate on a surface of a paper base; and a secondary agent supply step for supplying the secondary agent containing at least a polyvalent metal salt and xanthan gum to the main agent layer coated on the surface of the paper base. Provided is an oil-resistant packaging material that comprises an oil-resistant coating layer, which contains xanthan gum and a crosslinked body derived from a polyvalent metal alginate, on a surface of a paper base. Provided is an oil-resistant tableware that comprises a similar oil-resistant coating layer on an inner surface that is in contact with contents.

## Description

### TECHNICAL FIELD

The present invention relates to an oil-resistant coating agent, an oil-resistant coating method, an oil-resistant packaging material, and oil-resistant tableware.

### BACKGROUND ART

Conventionally, when selling various types of snacks at fast food restaurants, convenience stores, and the like, simple bag-shaped or box-shaped paper packaging containers have been used so that food may be immediately eaten. Oil resistance is required for packaging materials of such packaging containers when used for foods containing large amounts of oil, such as french fries and fried chicken.

For paper-based packaging materials having oil resistance, fluororesin-based oil-resistant agents are commonly used, and for example, oil-resistant papers in which a fluororesin-based oil-resistant agent is applied to a surface of a paper base to provide an oil-resistant coating layer, and oil-resistant papers in which a fluororesin-based oil-resistant agent is internally added to a paper substrate are known (see, for example, Patent Document 1). However, oil-resistant papers using a fluororesin-based oil-resistant agent generate various fluorine-containing decomposition products that may affect the environment when incinerated. Since such fluorine-containing decomposition products raise concerns about affecting the global environment and human health, packaging materials that use as little fluororesin as possible are in demand.

As oil-resistant packaging materials that do not use fluororesin, oil-resistant papers in which a resin layer comprising oil-resistant or oil-repellent resin materials such as polyvinyl alcohol and acrylic resins is coated on a surface of a paper base have been proposed (see, for example, Patent Document 2 and Patent Document 3). Oil-resistant papers using these resin materials contain relatively fewer substances in the exhaust gas during combustion that would affect the global environment and human health.

Meanwhile, due to the growing momentum for global environmental protection in recent years, attempts have been made to transition from petroleum-based materials or resin materials utilizing petroleum-based materials to naturally derived materials. Regarding materials used in oil-resistant packaging materials, development of packaging materials that do not use fluororesin is the main focus, and no particular movement toward transitioning from the aforementioned resin materials to naturally derived materials has been observed; however, in line with worldwide trends, transitions to naturally derived materials are being attempted for all types of materials, and it is meaningful to also attempt to achieve this for oil-resistant packaging materials.

### Citation List

### Patent Documents

Patent Document 1: Japanese Unexamined Patent Application Publication No. 2000-026601
Patent Document 2: Japanese Unexamined Patent Application Publication No. H8-209590
Patent Document 3: Japanese Unexamined Patent Application Publication No. H9-3795

### DISCLOSURE OF THE INVENTION

### Problems to be Solved by the Invention

Accordingly, an object of the present invention is to provide an oil-resistant coating agent exhibiting excellent oil resistance that mainly uses naturally derived materials containing no petroleum-based materials and no resin materials utilizing petroleum-based materials, an oil-resistant coating method using said oil-resistant coating agent, and an oil-resistant packaging material and oil-resistant tableware exhibiting excellent oil resistance.

### Means for Solving the Problems

The above object is achieved by each of the following aspects of the present invention. That is, an oil-resistant coating agent according to one aspect of the present invention is a two-component oil-resistant coating agent comprising: a main agent containing at least an alginate;
and a secondary agent containing at least a polyvalent metal salt and xanthan gum.

An oil-resistant coating method according to another aspect of the present invention comprises: a main agent coating step of coating a main agent containing at least an alginate on a surface of an object to be treated; and a secondary agent supply step of supplying a secondary agent containing at least a polyvalent metal salt and xanthan gum to a layer of the main agent coated on the surface of the object to be treated.

An oil-resistant packaging material according to another aspect of the present invention has an oil-resistant coating layer, on a surface of a paper base, comprising a crosslinked body of an alginate by a polyvalent metal and xanthan gum. As the paper base, it is preferable that the paper base has a base coating layer on the surface.

An oil-resistant tableware according to still another aspect of the present invention has an oil-resistant coating layer, on an inner surface that is in contact with contents, comprising a crosslinked body of an alginate by a polyvalent metal and xanthan gum.

### Effects of the Invention

According to the present invention, it is possible to provide an oil-resistant coating agent exhibiting excellent oil resistance that mainly uses naturally derived materials containing no petroleum-based materials and no resin materials utilizing petroleum-based materials, an oil-resistant coating method using said oil-resistant coating agent, and an oil-resistant packaging material and oil-resistant tableware exhibiting excellent oil resistance.

### BRIEF DESCRIPTION OF THE DRAWINGS

FIG. 1 is a schematic diagram of a coating device using a roll coating method, wherein (a) is an example of a coating device of a single-roll type, and (b) is an example of a coating device of a two-roll type (kiss-touch roll);
FIG. 2 is a chart showing an infrared absorption spectrum (FT-IR) of a surface of a paper base "S Pearl Card" (basis weight 260 g/m²) used in Example 5 (the same for all of Examples 1 to 15) on which an oil-resistant coating layer is applied;
FIG. 3 is a chart showing an infrared absorption spectrum (FT-IR) of a surface of a paper base "S Pearl Card" (basis weight 310 g/m²) used in Example 16 on which an oil-resistant coating layer is applied;
FIG. 4 is a chart showing an infrared absorption spectrum (FT-IR) of a surface of a paper base "HPS" (basis weight 230 g/m²) used in Example 17 on which an oil-resistant coating layer is applied;
FIG. 5 is a chart showing an infrared absorption spectrum (FT-IR) of a surface of a paper base "Sherry SZ" (basis weight 230 g/m²) used in Example 18 on which an oil-resistant coating layer is applied;
FIG. 6 is a chart showing an infrared absorption spectrum (FT-IR) of a surface of a paper base "Sherry SZ" (basis weight 320 g/m²) used in Example 19 on which an oil-resistant coating layer is applied;
FIG. 7 is a chart showing an infrared absorption spectrum (FT-IR) of a surface of a paper base "OK Freece Pro" (basis weight 260 g/m²) used in Example 20 on which an oil-resistant coating layer is applied; and
FIG. 8 is a chart showing an infrared absorption spectrum (FT-IR) of a surface of a paper base "Floshu White Card W" (basis weight 285 g/m²) used in Example 21 on which an oil-resistant coating layer is applied.

### PREFERRED MODE FOR CARRYING OUT THE INVENTION

Hereinafter, the oil-resistant coating agent, the oil-resistant coating method, the oil-resistant packaging material, and the oil-resistant tableware of the present invention will be described in detail with reference to preferred embodiments.

### [Oil-Resistant Coating Agent]

The oil-resistant coating agent of the present invention is a two-component oil-resistant coating agent comprising a main agent and a secondary agent, and when used, the two are combined to form an oil-resistant coating film. Hereinafter, the main agent and the secondary agent will be described, and the usage thereof will be described in the following section of [Oil-Resistant Coating Method].

### (Main Agent)

The main agent in the oil-resistant coating agent of the present invention contains at least an alginate. The main agent is in the form of an aqueous solution of an alginate. The "alginate" referred to herein is a concept encompassing, in addition to salts of alginic acid, derivatives thereof.

Usable alginates include sodium alginate, ammonium alginate, potassium alginate, propylene glycol alginate ester, and the like, and two or more of these may be mixed and used. These alginates are food additives (specified additives) under the Food Sanitation Act in Japan, and are extremely safe as raw materials for oil-resistant coating agents used in packaging materials for food. Among these, it is preferable to use sodium alginate from the viewpoints of handleability and ease of availability.

There is no particular limitation on the water constituting the main agent, and general municipal water, tap water, groundwater, industrial water, and the like, as well as deionized water, pure water, purified water, and the like, may be used. The main agent may also be blended with a water-retaining agent and an antifoaming agent for suppressing drying of alginic acid, a colorant for coloring the coating film or for distinguishing the main agent from the secondary agent, a preservative, a viscosity modifier, a dispersant, and the like. It is desirable that the main agent does not contain petroleum-based materials and resin materials utilizing petroleum-based materials; however, when they are contained, the content is preferably 5% or less, and more preferably 2% or less. The main agent may be prepared by mixing the components constituting the main agent using a blender or the like.

The concentration of the alginate in the main agent cannot be stated in general terms because it depends on the type of alginate used, the method of coating on a paper base, the target coating film thickness, and the like, and may be appropriately designed according to the conditions, purposes, and the like.

As a rough guide, the upper limit of the concentration of the alginate in the main agent is preferably 20% or less, more preferably 15% or less, and still more preferably 12% or less, on a mass basis. If the concentration of the alginate in the main agent is too high, it is not preferable because there is a concern that the viscosity becomes too high and uniform coating becomes difficult.

On the other hand, similarly, the lower limit of the concentration of the alginate in the main agent is preferably 0.1% or more, more preferably 1% or more, and still more preferably 5% or more, on a mass basis. If the concentration of the alginate in the main agent is too low, it is not preferable because the viscosity becomes too low and it becomes difficult to secure a sufficient film thickness.

### (Secondary Agent)

The secondary agent in the oil-resistant coating agent of the present invention contains at least a polyvalent metal salt and xanthan gum. The secondary agent is in the form of an aqueous solution in which a polyvalent metal salt and xanthan gum are mixed. The "polyvalent metal salt" referred to herein is a salt of a metal that becomes a divalent or higher cation, and is a salt of a metal ion that exhibits a crosslinking reaction with the alginate contained in the main agent.

Usable polyvalent metal salts include calcium salts, magnesium salts, barium salts, iron salts, copper salts, aluminum salts, zinc salts, and the like. Specific examples include calcium chloride, calcium acetate, calcium carbonate, calcium citrate, calcium sulfate, calcium lactate, magnesium chloride, magnesium carbonate, ferric chloride, iron citrate, ferrous sulfate, iron lactate, and the like. These polyvalent metal salts are food additives (specified additives) under the Food Sanitation Act, and are extremely safe as raw materials for oil-resistant coating agents used in packaging materials for food. Among these, it is preferable to use calcium chloride from the viewpoints of handleability and ease of availability.

The concentration of the polyvalent metal salt in the secondary agent cannot be stated in general terms because it depends on the type of polyvalent metal salt used, the type of alginate of the main agent coated on the paper base, or the coating film thickness, and the like, and may be appropriately designed according to the conditions, purposes, and the like. When designing the formulation of the secondary agent, the concentration in the secondary agent may be adjusted so that the required amount of polyvalent metal salt is supplied in accordance with the amount of alginate of the main agent coated on the paper base and the target degree of crosslinking.

As a rough guide, the upper limit of the concentration in the case where the polyvalent metal salt in the secondary agent is calcium chloride is preferably 20% or less, and more preferably 10% or less, on a mass basis. If the concentration of the polyvalent metal salt in the secondary agent is too high, it is not preferable because there is a concern that unreacted portions with the alginate may precipitate on the surface of the coating film.

On the other hand, similarly, the lower limit of the concentration in the case where the polyvalent metal salt in the secondary agent is calcium chloride is preferably 0.1% or more, more preferably 0.3% or more, and still more preferably 0.5% or more, on a mass basis. If the concentration of the polyvalent metal salt in the secondary agent is too low, it is not preferable because it becomes difficult to supply the amount of polyvalent metal salt necessary for crosslinking the alginate.

For polyvalent metal salts other than calcium chloride as well, the concentration may be appropriately designed in accordance with the case of calcium chloride while taking into consideration the atomic weight and reactivity of the elements contained.

The secondary agent in the oil-resistant coating agent of the present invention contains xanthan gum as an essential component. In the secondary agent, xanthan gum acts mainly as a thickening agent. As described later, the secondary agent is supplied to the layer of the main agent coated on the paper base; however, if only an aqueous solution of the polyvalent metal salt is supplied, the viscosity would be too low.

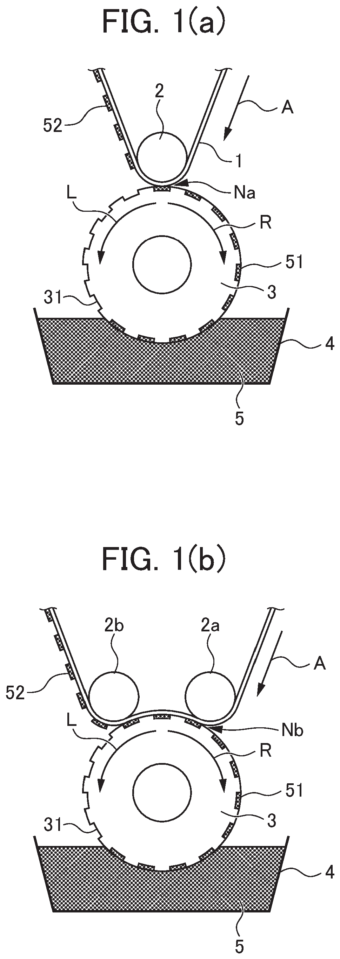

That is, when an attempt is made to supply a secondary agent having a low viscosity to a planar supply target surface, the secondary agent spreads or is repelled, making it difficult to secure the supply amount of the secondary agent. In particular, when the method of supplying the secondary agent to the supply target surface is a roll coating method (see FIG. 1), if the viscosity of the secondary agent is too low, it becomes difficult to retain the secondary agent on the surface of a pickup roll (also referred to as an applicator roll), and it is difficult to supply a sufficient amount of the secondary agent to the layer of the main agent. Also, in the case of the bar coating method, the wet film after supply is repelled, making it difficult to apply the secondary agent uniformly over the entire surface. For this reason, in the present invention, xanthan gum is used as a viscosity modifier for increasing the viscosity of the secondary agent.

By using xanthan gum as a viscosity modifier for the secondary agent, it is possible to achieve an appropriate viscosity with a small addition amount, and at the same time, to achieve high oil resistance. In addition, sliminess is unlikely to occur on the coating surface even in the presence of moisture, the effect on food that comes into contact with the surface is small, and no discomfort is caused to the person eating the food. Furthermore, although a crosslinked film of alginate is susceptible to excessive drying, the coating film is protected by the xanthan gum remaining in the interior and on the surface of the coating film after the crosslinking reaction by the polyvalent metal salt in the secondary agent, which functions as a humectant that retains moisture. Xanthan gum is a food additive (existing additive) under the Food Sanitation Act as a thickening polysaccharide, and is extremely safe as a raw material for oil-resistant coating agents used in packaging materials for food.

The lower limit of the concentration of xanthan gum in the secondary agent cannot be stated in general terms because it depends on the method of supplying the secondary agent to the supply target surface and various other conditions. For example, in the case of a supply method in which the secondary agent is directly supplied to the supply target surface, such as a spray method or a bar coating method, a relatively low viscosity may be acceptable since it is sufficient if the wet film after supply is maintained without being repelled; however, in the case of a method in which a liquid secondary agent is retained on the surface of a pickup roll and then transferred to the supply target surface, such as a roll coating method, a certain degree of high viscosity is required for retaining the secondary agent on the roll surface. Also, even in the case of the roll coating method, the required viscosity differs depending on whether the pickup roll is, for example, a gravure roll having unevenness on the surface by engraving, or a mirror roll with a mirror-finished surface.

Specifically, for example, the lower limit of the concentration of xanthan gum in the case where the pickup roll is a gravure roll is preferably approximately 0.04% or more, and more preferably 0.06% or more, on a mass basis, though it also depends on the degree of unevenness of the pickup roll. The viscosity of the secondary agent in this case as measured by a Type B viscometer (rotation speed: 30 rpm (rotations/minute), temperature: 25°C. The same applies hereinafter.) is preferably 15 mPa·s or more, and more preferably 20 mPa·s or more.

Also, the lower limit of the concentration of xanthan gum in the case where the pickup roll is a mirror roll is preferably approximately 0.06% or more, and more preferably 0.09% or more, on a mass basis. The viscosity of the secondary agent in this case as measured by a Type B viscometer is preferably 20 mPa·s/25°C or more, and more preferably 50 mPa·s/25°C or more. Also, in the case of a supply method in which the secondary agent is directly supplied to the supply target surface, such as a spray coating method, a bar coating method, a flow coating method, or a curtain coating method, the concentration is preferably approximately 0.02% or more, and more preferably 0.04% or more, on a mass basis. The viscosity of the secondary agent in this case as measured by a Type B viscometer is preferably 5 mPa·s/25°C or more, and more preferably 15 mPa·s/25°C or more.

On the other hand, the upper limit of the concentration of xanthan gum in the secondary agent is preferably 0.3% or less, more preferably 0.26% or less, still more preferably 0.21% or less, and particularly preferably 0.18% or less, on a mass basis. If the concentration of xanthan gum in the secondary agent is too high, it is not preferable because sliminess occurs when moisture comes into contact with the surface of the formed coating film, and concern arises about the effect on food that comes into contact with the surface.

Also, the upper limit of the viscosity of the secondary agent as measured by a Type B viscometer is preferably 500 mPa·s or less, more preferably 350 mPa·s or less, still more preferably 200 mPa·s or less, and particularly preferably 150 mPa·s or less. If the viscosity of the secondary agent is too high, it is not preferable because the coating applicability decreases. It is preferable to aim for a viscosity of approximately 100 mPa·s as measured by a Type B viscometer for the secondary agent.

The water constituting the secondary agent is the same as in the case of the main agent. The secondary agent may also be blended with a colorant for distinguishing the secondary agent from the main agent, a preservative, a dispersant, an antifoaming agent, and the like. As with the main agent, it is desirable that the secondary agent also does not contain petroleum-based materials and resin materials utilizing petroleum-based materials; however, when they are contained, the content is preferably 5% or less, and more preferably 2% or less. The secondary agent may be prepared by mixing the components constituting the secondary agent using a blender or the like.

### [Oil-Resistant Coating Method]

The oil-resistant coating method of the present invention comprises a main agent coating step and a secondary agent supply step. It is preferable that the main agent coating step and the secondary agent supply step are performed in this order, but the order may be reversed. Also, when the main agent coating step comes first, it is preferable to have a first drying step between the main agent coating step and the secondary agent supply step, and a second drying step after the secondary agent supply step, respectively. Hereinafter, each of these steps will be described.

### (Main Agent Coating Step)

The main agent coating step in the oil-resistant coating method of the present invention is a step of coating a main agent containing at least an alginate on a surface of an object to be treated. The main agent is as described in the section on the oil-resistant coating agent of the present invention. The "surface of the object to be treated" referred to herein is the surface of a paper base when an oil-resistant packaging material is to be obtained, and is the inner surface that is in contact with contents in the tableware when oil-resistant tableware is to be obtained. In this manner, when oil-resistant tableware is to be obtained, the main agent and the like may be coated on the inner surface after first forming the shape of the tableware to form the oil-resistant coating layer described later; however, it is also possible to form the oil-resistant coating layer on a paper base to obtain an oil-resistant packaging material and then form the shape of the tableware using the oil-resistant packaging material.

The "paper base" as the object to be treated refers to a sheet that serves as the base of the oil-resistant packaging material, and typically, so-called paper, which is produced by intertwining fibers of plants or the like, forming them into a sheet, and drying it, is used. However, fibers other than plant fibers may be used, components other than fibers may be contained, and woven fabrics or nonwoven fabrics of various fibers may also be used. Furthermore, even if fibrous materials are not used as the raw material, any sheet-like film may be used as a paper base in the present invention. That is, the "paper base" in the present invention is a concept that also encompasses sheets that do not correspond to paper.

As the paper base, it is preferable that the paper base has a base coating layer on the surface where the oil-resistant coating layer is to be formed. The base coating layer formed on the surface of the paper base is generally formed with a binder containing a pigment and other additives, but the pigment and other additives are not essential components. Note that the "surface" referred to herein refers to the surface where the oil-resistant coating layer is formed as described above, and is different from the surface of general paper that serves as an outer surface provided with a coat layer for improving design or printability and thus having gloss, luster, and the like. In this case, the surface where the oil-resistant coating layer is formed is the surface that is regarded as the back surface in general paper, and it is preferable that such surface has a base coating layer.

As binders used in the base coating layer, latexes such as styrene-butadiene latex, styrene-acrylic latex, and ethylenevinyl acetate latex; natural polymers such as starch, casein, and soybean protein; cellulose derivatives such as carboxymethyl cellulose and hydroxyethyl cellulose; and synthetic polymers such as polyvinyl alcohol and alkalisoluble resins may be mentioned.

As pigments that may be blended in the base coating layer, as inorganic pigments, natural mineral pigments such as clay, talc, and ground calcium carbonate; composite synthetic pigments such as satin white and lithone; and semi-synthetic pigments such as titanium oxide, precipitated calcium carbonate, and alumina hydrate, as well as, as organic pigments, plastic pigments and the like may be mentioned.

There is no particular limitation on the thickness of the base coating layer, but those of approximately 2 µm to 30 µm are used. As the paper base having a base coating layer on the surface, various papers and coated papers that are commercially available with a base coating layer on the surface where the oil-resistant coating layer is to be formed may also be used. Specific examples include "S Pearl Card" manufactured by Mitsubishi Paper Mills Ltd., "Sherry SZ" manufactured by Chuetsu Pulp & Paper Co., Ltd., "HPS" manufactured by Hokuetsu Corporation, "OK Freece Pro" manufactured by Oji Paper Co., Ltd., "Floshu White Card W" manufactured by Nippon Paper Industries Co., Ltd., and the like.

Note that, in commercially available papers and coated papers, there are papers in which the so-called coat layer having gloss, luster, and the like for improving design or printability is not provided on both sides or on the back surface (the surface corresponding to the surface where the oil-resistant coating layer is to be formed in the present invention), and which are therefore uncoated or single-side coated; however, even such an uncoated surface may have a base coating layer suitable for the surface where the oil-resistant coating layer is to be formed. That is, in the present invention, a base coating layer suitable for the paper base may be an extremely thin film base coating layer that does not correspond to a so-called coat layer. Conversely, a thick film base coating layer exceeding 30 µm may in some cases be rather unsuitable for a paper base to which the present invention is applied.

Also, the "tableware" as the object to be treated may be tableware formed from sheets using various fibers or other various sheets, in addition to so-called paper tableware such as paper plates, paper bowls, and paper cups, in the same manner as the paper base. That is, the "tableware" in the present invention is a concept that also encompasses tableware formed from sheets that do not correspond to paper.

As the method of coating the main agent, various conventionally known coating methods may be employed. Specific examples include a roll coating method, a spray coating method, a bar coating method, a flow coating method, a curtain coating method, a dip coating method, a slot die coater method, a lip coater method, a knife coater method, a brush coating method, and the like. When the object to be treated is a "paper base," it is preferable to employ the roll coating method among these, since it has a simple and low-cost device configuration with mass productivity and allows a relatively uniform film thickness to be easily obtained.

FIG. 1 shows a schematic diagram of a coating device using a roll coating method. In FIG. 1, (a) is an example of a coating device of a single-roll type, and (b) is an example of a coating device of a two-roll type (kiss-touch roll). A coating device of a single-roll type (hereinafter referred to as "coating device A.") is configured such that, as shown in FIG. 1(a), a strip-shaped paper base 1 wound in n coils (not shown) is unwound, fed from a preceding step, advances in the direction of arrow A, wraps around a backup roll 2 for slightly less than half a revolution, changes direction, and is fed to the next step.

An upper portion of a pickup roll 3 is disposed facing the backup roll 2 with a paper base 1 interposed therebetween. The paper base 1 is inserted between the backup roll 2 and the pickup roll 3. In the present device, a portion where the backup roll 2 and the pickup roll 3 face each other serves as a nip portion Na where the pickup roll 3 and the paper base 1 are in contact with each other. A lower portion of the pickup roll 3 is immersed in a supply liquid 5 in a state of being submerged in the liquid surface of the supply liquid 5 stored in a liquid tank 4. When the coating device is used in the main agent coating step, the main agent as the supply liquid 5 is stored in the liquid tank 4.

In the example of FIG. 1, the pickup roll 3 rotates in either the direction of forward rotation in the direction of arrow L (hereinafter referred to as forward rotation L) or the direction of reverse rotation in the direction of arrow R (also referred to as "reverse."
Hereinafter referred to as reverse rotation R). Pits 31 are formed on the surface (peripheral surface) of the pickup roll 3 by engraving. In the example of FIG. 1, the pickup roll 3 is depicted as rotating in the forward rotation L.

When the pickup roll 3 rises above the liquid surface of the supply liquid 5 by rotation from the state of being immersed in the supply liquid 5, the pickup roll 3 scoops up the supply liquid 5 into the pits 31. The supply liquid 5 is carried to the nip portion Na while being retained in the pits 31 as it is, and is transferred to the surface of the paper base 1 inserted through the nip portion Na. The pits 31 that have been emptied by transferring the supply liquid 5 to the surface of the paper base 1 are again immersed in the supply liquid 5 by the forward rotation L of the pickup roll 3, scoop up the supply liquid 5, and are used for the next transfer of the supply liquid 5 to the surface of the paper base 1. Note that an air knife device (not shown) that blows air onto the surface of the paper base 1 to which the supply liquid 5 has been transferred to level the amount of adhesion of the supply liquid 5 may also be provided.

On the other hand, a coating device of a two-roll type (hereinafter referred to as "coating device B.") is provided with two backup rolls 2a and 2b, as shown in FIG. 1(b). In the coating device B, a strip-shaped paper base 1 wound in a coil (not shown) is unwound, fed from a preceding step, advances in the direction of arrow A, wraps around the two backup rolls 2a and 2b sequentially for approximately 1/3 of a revolution each, changes direction, and is fed to the next step. The two backup rolls 2a and 2b are spaced apart by a fixed interval.

Upper portions of the pickup roll 3 are disposed facing both of the two backup rolls 2a and 2b with the paper base 1 interposed therebetween. The paper base 1 is inserted between the two backup rolls 2a and 2b and the pickup roll 3. In the present device, an arc portion of the outer periphery of the pickup roll 3 between the portion facing the backup roll 2a and the portion facing the backup roll 2b serves as a nip portion Nb where the pickup roll 3 and the paper base 1 are in contact with each other. That is, the coating device B has a higher efficiency of transferring the transfer liquid 51 from the pickup roll 3 to the paper base 1 as compared to the coating device A. Note that it is also possible to once transfer the supply liquid 5 from the pickup roll 3 to another transfer roll (not shown) and then apply it to the paper base 1.

Both the coating device A and the coating device B can perform reverse coating by rotating the pickup roll 3 in the reverse rotation R. In the reverse coating, the transfer liquid 51 is transferred to the surface of the paper base 1 while the peripheral surface of the pickup roll 3 slides against the surface of the paper base 1 advancing in the direction of arrow A. By performing the reverse coating, the contact area of the peripheral surface of the pickup roll 3 per unit area of the paper base 1 increases, so that more of the supply liquid 5 may be supplied.

As the method of coating the main agent, either of the coating devices employing the roll coating method, namely the coating device A and the coating device B described with reference to FIG. 1(a) and FIG. 1(b), may be employed. The pickup roll 3 may also be used in either direction of forward rotation L and reverse rotation R.

In the coating device A and the coating device B described with reference to FIG. 1(a) and FIG. 1(b), a gravure roll having unevenness on the surface by engraving is used as the pickup roll 3; however, a mirror roll with a mirror-finished surface may of course also be used. Note that, in FIG. 1(a) and FIG. 1(b), the pits 31 are depicted in an exaggerated manner by drawing them extremely long in the circumferential direction for the purpose of explanation; however, they are actually extremely fine recessed portions, and the transferred coating layer 52 becomes a uniform planar coating film in which the shape of the pits 31 barely remains.

In the above examples, the example of coating a paper base by the roll coating method has been described as a representative example; however, when another coating method is employed, the main agent may be coated by a conventionally known method according to the type of object to be treated (paper base or tableware).

The coating amount of the main agent in the main agent coating step cannot be stated in general terms because it depends on the required degree of oil resistance, the required degree of cost reduction in the amount of main agent used, and the like; however, in order to achieve a kit value of 6 or more by the kit method described later, the dry mass of the main agent is preferably 1.5 g/m² or more, more preferably 1.8 g/m² or more, and still more preferably 2.0 g/m² or more.

On the other hand, the upper limit of the coating amount of the main agent is not particularly limited; however, since an excessively thick coating wastes materials and increases the thickness of the packaging material, thereby reducing handleability, the coating amount is preferably approximately 10 g/m² or less, and more preferably 5 g/m² or less.

### (First Drying Step)

The paper base on which the main agent has been coated on the surface by the operation of the main agent coating step is dried by the first drying step until the layer of the main agent takes shape to a certain degree and forms a layer. Examples of drying methods include placing the paper base in a heated oven, passing the paper base through a similar oven as a line process, applying hot air, warm air, or cold air to the paper base, or leaving the paper base in the atmosphere for natural drying, and the like. When the paper base is simply stacked until natural drying occurs before the next step of the main agent coating step, or when sufficient time for natural drying is secured as a line process, these may be regarded as the operations of the "first drying step," and no special operation as this step needs to be performed.

When an oven is used or hot air or warm air is applied as the operation of this step, it is desirable not to over-dry the coating film of the main agent, and therefore it is preferable to set the environment to 130°C or lower for approximately 10 to 120 seconds.

### (Secondary Agent Supply Step)

The secondary agent supply step in the oil-resistant coating method of the present invention is a step of supplying a secondary agent to the layer of the main agent coated on the surface of the paper base. The secondary agent is as described in the section on the oil-resistant coating agent of the present invention.

As the method of supplying the secondary agent, various conventionally known coating methods cited in the main agent coating step may be employed. In this step as well, as in the main agent coating step, it is preferable to employ the roll coating method since it has a simple and low-cost device configuration with mass productivity and allows a relatively uniform supply amount to be easily achieved. Note that it is desirable to perform the supply of the secondary agent in an environment of 5 to 40°C and a humidity of 20 to 80%.

The coating device A and the coating device B described with reference to FIG. 1(a) and FIG. 1(b) may similarly be employed as a method of coating the secondary agent in the present secondary agent supply step. The pickup roll 3 may also be used in either direction of forward rotation L and reverse rotation R. Furthermore, the point that various conditions such as a gravure roll and a mirror roll may be appropriately selected as the pickup roll 3 is also the same as in the main agent coating step.

The supply amount of the secondary agent in the secondary agent supply step cannot be stated in general terms because it depends on the dry mass of the main agent coated on the paper base, the concentration of the polyvalent metal salt in the secondary agent to be supplied, and the like, and may be designed so that a sufficient amount of polyvalent metal salt for the crosslinking reaction with the alginate may be supplied. The wet mass of the specific supply amount of the secondary agent is preferably 5 g/m² or more, and more preferably 10 g/m² or more. On the other hand, the upper limit of the coating amount of the secondary agent is not particularly limited, and the upper limit is naturally determined by the viscosity of the secondary agent, the supply method, and the like.

### (Second Drying Step)

In the layer of the main agent to which the secondary agent has been supplied by the operation of the secondary agent supply step, the alginate in the main agent and the polyvalent metal in the secondary agent undergo a crosslinking reaction, and a crosslinked body is formed. Then, the layer is dried by the second drying step in order to evaporate excess moisture. As the drying method in the second drying step, any of the drying methods described in the first drying step (including the case where no special operation is performed) may be employed. The conditions described in the first drying step for drying temperature, drying time, and the like are also followed in the second drying step.

### [Oil-Resistant Packaging Material, Oil-Resistant Tableware]

As described in the preceding section of [Oil-Resistant Coating Method], articles such as the oil-resistant packaging material and the oil-resistant tableware of the present invention may be manufactured by using the two-component oil-resistant coating agent of the present invention and performing the operations of the oil-resistant coating method of the present invention.

The oil-resistant packaging material of the present invention has an oil-resistant coating layer, on a surface of a paper base, comprising a crosslinked body of an alginate by a polyvalent metal and xanthan gum. Also, the oil-resistant tableware of the present invention has an oil-resistant coating layer, on an inner surface that is in contact with contents, comprising a crosslinked body of an alginate by a polyvalent metal and xanthan gum. In the formed oil-resistant coating layer, xanthan gum is incorporated into the gaps of a film in which a crosslinked body of an alginate by a polyvalent metal is spread in a mesh pattern, and xanthan gum is also present on the surface of the film.

Even when an alginate is crosslinked by a polyvalent metal to form a crosslinked body, it is susceptible to excessive drying and may lead to pinholes, cracks, and even collapse of the film. However, in the oil-resistant packaging material of the present invention, since xanthan gum is incorporated into the film of the oil-resistant coating layer and is also present on the surface of the film, the film is protected by functioning as a humectant that retains moisture.

As specific examples of the oil-resistant packaging material, sheet-shaped, bag-shaped, box-shaped, tray-shaped, and cup-shaped packaging materials may be mentioned. Also, as specific examples of the oil-resistant tableware, containers of plate-shaped, bowl-shaped, cup-shaped, and the like (paper plates, paper bowls, paper cups, etc.), cutlery (paper spoons, paper forks, etc.), straws (paper straws), and other tableware may be mentioned.

The oil-resistant coating agent, the oil-resistant coating method, the oil-resistant packaging material, and the oil-resistant tableware of the present invention have been described above with reference to preferred embodiments; however, the oil-resistant coating agent, the oil-resistant coating method, and the oil-resistant packaging material of the present invention are not limited to the configurations of the above-described embodiments. A person skilled in the art may appropriately modify the oil-resistant coating agent, the oil-resistant coating method, the oil-resistant packaging material, and the oil-resistant tableware of the present invention in accordance with conventionally known findings. It goes without saying that such modifications are included within the scope of the present invention as long as they still include the configuration of the present invention.

### EXAMPLES

Hereinafter, the oil-resistant coating agent, the oil-resistant coating method, and the oil-resistant packaging material of the present invention will be described more specifically with reference to examples; however, the present invention is not limited by these examples.

### (1) Preparation of Main Agent

A 10% (mass basis) aqueous solution of sodium alginate was prepared, and this was designated as main agent M.

### (2) Preparation of Secondary Agents for Examples

Aqueous solutions were prepared such that the calcium chloride concentration was 5% (mass basis) and xanthan gum was at the concentrations shown in Table 1 below, and these were designated as secondary agents J1 to J8 for the examples. Note that "Laborgum (registered trademark) GS-C" manufactured by MP Gokyo Food & Chemical Co., Ltd. was used as the xanthan gum (the same applies hereinafter).

### (3) Viscosity Measurement of Secondary Agents

The viscosities of the prepared secondary agents J1 to J8 and secondary agents H1 to H5 were measured using a Type B viscometer under conditions of a rotation speed of 30 rpm (rotations/minute) and a temperature of 25°C. The results are collectively shown in Table 1 below.

### (4) Operations and Evaluation of Oil-Resistant Coating of Examples 1 to 8

### (4-1) Main Agent Coating Step

Main agent M prepared using a coater was applied to a paper base using a #14 bar coater, such that the wet (moist) supply amount was 21 g/m² (the dry film thickness was 2.1 g/m², and is designated as A-1 in Table 1 below) to perform coating by the bar coating method. This coating operation was carried out in an environment of room temperature (approximately 20°C). The same conditions were applied to the secondary agent supply step described later. Note that "S Pearl Card" manufactured by Mitsubishi Paper Mills Ltd. (basis weight 260 g/m², size 25 cm × 20 cm) was used as the paper base, and the main agent was coated on the back surface of the surface that serves as the coat layer (the surface with gloss).

### (4-2) First Drying Step

The paper base on which main agent M had been coated was dried at a drying furnace temperature of 120°C for a drying time of 30 seconds, thereby forming a coating film of main agent M.

### (4-3) Secondary Agent Supply Step

The paper base on which the coating film had been formed was allowed to stand in an environment of temperature: 23°C and humidity: 50% RH for 24 hours or more, after which the secondary agents indicated in the "Type" column of Examples 1 to 8 in Table 1 below were applied onto the coating film of the main agent coated on the surface using a #20 bar coater without applying pressure, so that the wet supply amount was 30 g/m² or more, by the bar coating method. The coating state at this time was evaluated as "suitability of secondary agent supply" according to the following criteria. The results are collectively shown in Table 1 below. Good (indicated by circle symbol (o)): Supply (coating) was performed uniformly and satisfactorily. Fair (indicated by triangle symbol (Δ)): Unevenness occurred but supply (coating) was performed over the entire surface. Poor (indicated by cross symbol (x)): The viscosity was too low and the secondary agent did not spread, so supply (coating) could not be performed over the entire surface.

### (4-4) Second Drying Step

The paper base on which the main agent had been coated and the secondary agent had been supplied was placed in an oven heated to 120°C and dried for 70 seconds, thereby forming an oil-resistant coating film to obtain an oil-resistant packaging material (n = 4). The crosslinking state of the formed coating film was confirmed and evaluated as "crosslinking state" according to the following criteria. The results are collectively shown in Table 1 below. Good (o): The entire coating film was crosslinked. Fair (Δ): Crosslinking was insufficient. Poor (x): No crosslinking had occurred.

### (4-5) Evaluation of Sliminess upon Water Dripping

Water was dripped in a linear pattern onto the oil-resistant coating film of the oil-resistant packaging materials of Examples 1 to 8 to a width of approximately 5 mm and a length of approximately 150 mm, left to stand for 1 minute, and then touched with a finger to evaluate the state of sliminess according to the following criteria. The results are collectively shown in Table 1 below. Very good (indicated by bullseye symbol (⊙)): No sliminess was felt. Good (o): Almost no sliminess was felt. Fair (Δ): Slight sliminess was felt. Poor (x): Sliminess was felt.

### (4-6) Evaluation of Kit Values

The kit values of the oil-resistant coating films of the oil-resistant packaging materials of Examples 1 to 8 were determined by the oil repellency test method for paper and paperboard (kit method) specified in Japan TAPPI Paper and Pulp Test Method No. 41. The values obtained with n = 4 were averaged and evaluated as the kit values of the evaluation results according to the following criteria. The results are collectively shown in Table 1 below. Very good (⊙): 8 or more
Good (o): 5 or more and less than 8
Fair (Δ): 2 or more and less than 5
Poor (x): less than 2

### (4-7) Evaluation of Number of Pinholes

With respect to the oil-resistant coating films of the oil-resistant packaging materials of Examples 1 to 8, kit 16 reagent (heptane 100%) used in the kit method was dripped in an amount of approximately 2.5 ml and left to stand for 15 seconds, after which the number of pinholes per 10 cm² was visually counted and evaluated according to the following criteria. The results are collectively shown in Table 1 below.
Very good (⊙): 25 or fewer
Good (o): 26 to 50
Fair (Δ): 51 or more

### (5) Operations and Evaluation of Oil-Resistant Coating of Examples 9 to 15

In "(4) Operations and Evaluation of Oil-Resistant Coating of Examples 1 to 8," the dry film thickness of the main agent was 3.6 g/m² for Examples 9 and 10 (designated as A-2 in Table 1), and 4.3 g/m² for Examples 13, 14, and 15 (designated as A-3 in Table 1). Also, except that J4 was used as the secondary agent, the step of "(4-3) Secondary Agent Supply Step" was replaced with a supply method using the roll coating method, and the drying time in "(4-4) Second Drying Step" was changed to 15 seconds, the oil-resistant coating operations were carried out and evaluated in the same manner as in Examples 1 to 8. The results are collectively shown in Table 1 below.

A kiss-touch type device shown in FIG. 1(b) was used for the roll coating. Also, a gravure roll (roll diameter: 240 mm) having unevenness of 70 diagonal lines on the surface was used as the pickup roll 3. In Examples 9, 11, and 13, the forward rotation L was used, and the feeding speed of the paper base (moving speed of the roll surface) was set to 24 m/min. Also, in Examples 10, 12, 14, and 15, the reverse rotation R (reverse) was used, and both the feeding speed of the paper base and the moving speed of the roll surface were set to 24 m/min. For Examples 12 and 15, an air knife device that blows air onto the surface of the paper base to which the secondary agent had been supplied was activated. The wet supply amount of the secondary agent (in the case with an air knife, the supply amount after activation of the air knife) was applied so as to be 10 g/m² or more. For Example 12 with reverse rotation R and with an air knife, the supply amount was 13 g/m², and it is estimated to be approximately 11 g/m² with forward rotation L and approximately 15 g/m² with reverse rotation R (without an air knife).

Note that the evaluation criteria for "suitability of secondary agent supply" were as follows. Good (o): The secondary agent adhered satisfactorily to the pickup roll and was transferred uniformly to the paper base. Fair (Δ): Although the secondary agent adhered to the pickup roll, unevenness occurred during transfer to the paper base. Poor (x): Repelling was observed on the surface of the pickup roll, and it was not possible to transfer the secondary agent to the entire paper base.

### (6) Preparation of Secondary Agents for Comparative Examples

In "(2) Preparation of Secondary Agents for Examples," an aqueous solution was prepared without blending xanthan gum, and this was designated as secondary agent H1 for comparative examples. Also, similarly, aqueous solutions were prepared using the viscosity modifiers shown in Table 1 below (hydroxypropyl guar gum or guar gum) instead of xanthan gum at the concentrations shown in the same Table 1, and these were designated as secondary agents H2 to H5 for comparative examples.

### (7) Operations and Evaluation of Oil-Resistant Coating of Comparative Examples 1 to 5

In "(4) Operations and Evaluation of Oil-Resistant Coating of Examples 1 to 8," the oil-resistant coating operations were carried out and evaluated in the same manner as in Examples 1 to 8, except that the secondary agents used were secondary agents H1 to H5. The results are collectively shown in Table 1 below.

### [Table 1]

**[Table 1]**

| | Coating Amount of Main Agent (drv) | Secondary Agent | | | | | | Evaluation Results | | | | |
|---|---|---|---|---|---|---|---|---|---|---|---|---|
| | | Type | Xanthan Gum Content (% by mass) | Other Thickening Agent (Content (% by mass)) | Viscosit y (mPa· S/25°C) | Supply Method | Supply Amount (wet) (g/m²) | Suitability of Secondary Agent Supply | Crosslink ing State | Slimines s upon Water Dripping | Kit Value | Number of Pinholes |
| Example 1 | A-1 | J1 | 0.050 | - | 16 | Bar Coating Method | 30 or more | ○ | ○ | ⊚ | ○ | ⊚ |
| Example 2 | A-1 | J2 | 0.075 | - | 24.4 | Bar Coating Method | 30 or more | ○ | ○ | ⊚ | ○ | ○ |
| Example 3 | A-1 | J3 | 0.100 | - | 53 | Bar Coating Method | 30 or more | ○ | ○ | ⊚ | ○ | ⊚ |
| Example 4 | A-1 | J4 | 0.150 | - | 106.8 | Bar Coating Method | 30 or more | ○ | ○ | ⊚ | ○ | ⊚ |
| Example 5 | A-1 | J5 | 0.175 | - | 138 | Bar Coating Method | 30 or more | ○ | ○ | ⊚ | ○ | ○ |
| Example 6 | A-1 | J6 | 0.200 | - | 174.8 | Bar Coating Method | 30 or more | ○ | ○ | ○ | ○ | ⊚ |
| Example 7 | A-1 | J7 | 0.250 | - | 300 | Bar Coating Method | 30 or more | ○ | ○ | △ | ○ | ○ |
| Example 8 | A-1 | J8 | 0.300 | - | 430 | Bar Coating Method | 30 or more | ○ | ○ | × | ○ | ⊚ |
| Example 9 | A-1 | J4 | 0.150 | - | 106.8 | Roll Coating Method (Forward Rotation / Kiss-Touch) | 10 or more | ○ | ○ | ⊚ | ○ | △ |
| Example 10 | A-1 | J4 | 0.150 | - | 106.8 | Roll Coating Method (Reverse Rotation / Kiss-Touch) | 10 or more | △ | △ | ○ | ⊚ | ⊚ |
| Example 11 | A-2 | J4 | 0.150 | - | 106.8 | Roll Coating Method (Forward Rotation / Kiss-Touch) | 10 or more | ○ | ○ | ⊚ | ⊚ | ⊚ |
| Example 12 | A-2 | J4 | 0.150 | - | 106.8 | Roll Coating Method (Reverse Rotation / Kiss-Touch / Air Knife) | 10 or more | ○ | ○ | ⊚ | ⊚ | ⊚ |
| Example 13 | A-3 | J4 | 0.150 | - | 106.8 | Roll Coating Method (Forward Rotation / Kiss-Touch) | 10 or more | ○ | ○ | ⊚ | ⊚ | ○ |
| Example 14 | A-3 | J4 | 0.150 | - | 106.8 | Roll Coating Method (Reverse Rotation / Kiss-Touch) | 10 or more | ○ | ○ | ⊚ | ⊚ | ○ |
| Example 15 | A-3 | J4 | 0.150 | - | 106.8 | Roll Coating Method (Reverse Rotation / Kiss-Touch / Air Knife) | 10 or more | △ | △ | ⊚ | ⊚ | ○ |
| Comparative Example 1 | A-1 | H1 | 0.000 | No Thickening Agent | 3.0 | Bar Coating Method | 30 or more | △ | ○ | ⊚ | ○ | △ |
| Comparative Example 2 | A-1 | H2 | 0.000 | Hydroxypropyl Guar Gum (0.5) | 92.0 | Bar Coating Method | 30 or more | ○ | ○ | × | ⊚ | ⊚ |
| Comparative Example 3 | A-1 | H3 | 0.000 | Hydroxypropyl Guar Gum (0.2) | 9.0 | Bar Coating Method | 30 or more | △ | ○ | × | ○ | ⊚ |
| Comparative Example 4 | A-1 | H4 | 0.000 | Guar Gum (0.5) | 320.0 | Bar Coating Method | 30 or more | △ | ○ | × | ⊚ | ⊚ |
| Comparative Example 5 | A-1 | H5 | 0.000 | Guar Gum(0.2) | 13.0 | Bar Coating Method | 30 or more | △ | ○ | × | ⊚ | ⊚ |

### (8) Discussion of Results of Examples 1 to 15 and Comparative Examples 1 to 5

As can be seen from the results of Examples 1 to 15, it is understood that a coating film that is uniform, excellent in oil resistance, and in which sliminess does not occur or only barely occurs even when in contact with moisture is formed by the two-component oil-resistant coating agent in which an aqueous solution of an alginate is used as the main agent and xanthan gum is blended into the secondary agent containing calcium chloride as a crosslinking agent.

In contrast, in Comparative Example 1 in which xanthan gum was not blended into the secondary agent, it is understood that the supply of the secondary agent became non-uniform and variation in film thickness occurred. On the other hand, in Comparative Examples 2 and 3 in which hydroxypropyl guar gum was used in the secondary agent, the blending amount became too large to achieve a viscosity excellent in the suitability of secondary agent supply (Comparative Example 2), and also, sliminess was felt when the secondary agents of both Comparative Examples 2 and 3 came into contact with moisture. With guar gum at a similar blending amount (Comparative Examples 4 and 5), the supply of the secondary agent became non-uniform and variation in film thickness occurred, and sliminess was also felt when the secondary agent came into contact with moisture.

### (9) Influence Confirmation Test of Paper Base (Examples 16 to 21, Comparative Examples 6 to 9)

In Example 5, only the paper base was replaced with those shown in Table 2 below (size: 25 cm × 20 cm), and the main agent and secondary agent were prepared under the same conditions as in Example 5 in all other respects, and the operations between (4-1) and (4-4) in the section "(4) Operations and Evaluation of Oil-Resistant Coating of Examples 1 to 8" (excluding, however, the evaluation of the crosslinking state) were carried out to coat the paper bases, thereby obtaining the oil-resistant packaging materials of Examples 16 to 21 (n = 4).

The processability of the surface on which the oil-resistant coating layer had been formed was evaluated according to the evaluation criteria shown below. Note that "left and right" in the evaluation criteria shown below refers to both sides in the direction perpendicular to the direction of coating by the bar coater. Also, "lower portion" refers to the vicinity of the end portion on the side where coating by the bar coater ends. The results are collectively shown in Table 2 below.

Very good (⊙): No scratches are observed in the oil-resistant coating layer, or only slight scratches of less than 0.5 mm in width are observed on the left and right of the oil-resistant coating layer. Good (o): Scratches of less than 0.5 mm in width are observed on the left and right and at the lower center of the oil-resistant coating layer. Fair (Δ): Scratches of 0.5 mm or more in width are observed on the left and right and at the lower center of the oil-resistant coating layer. Poor (x): Significant scratches are observed over the entire surface. Not Applicable (-): The liquid agent penetrated to the interior of the paper base.

Also, the paper bases used in Examples 5, 16, 18, and 19 with no coating applied thereto were designated as Comparative Examples 6 to 9 in order.

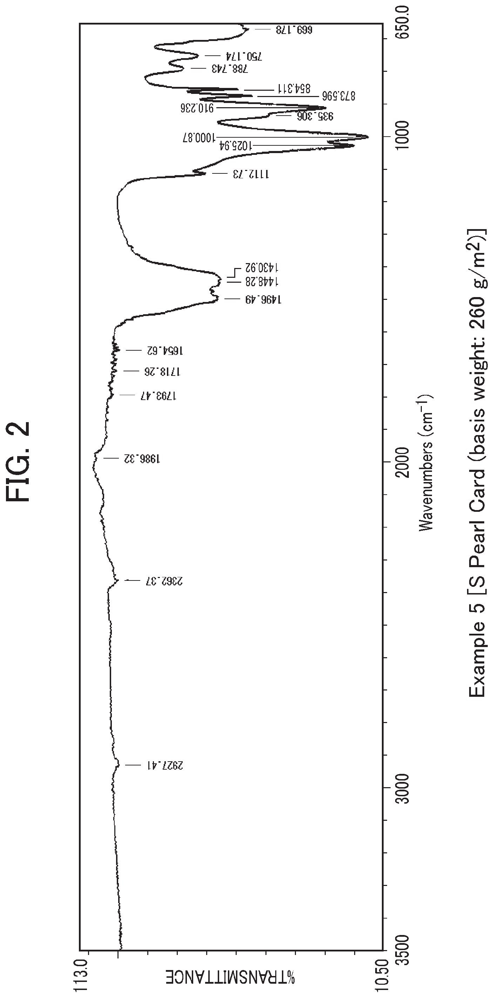

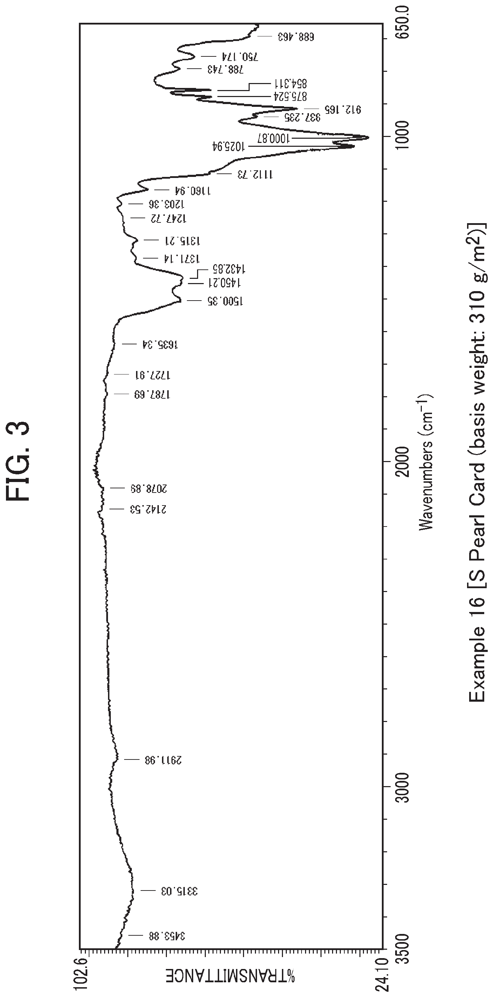

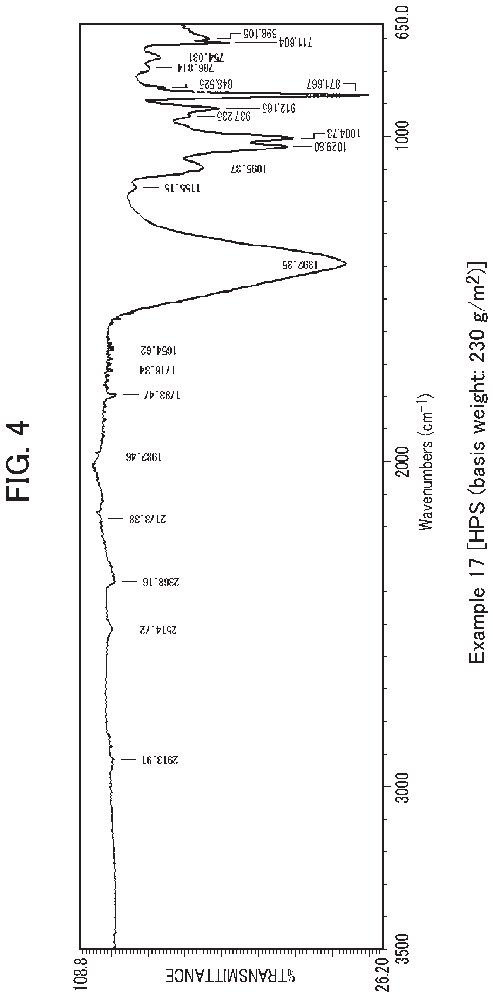

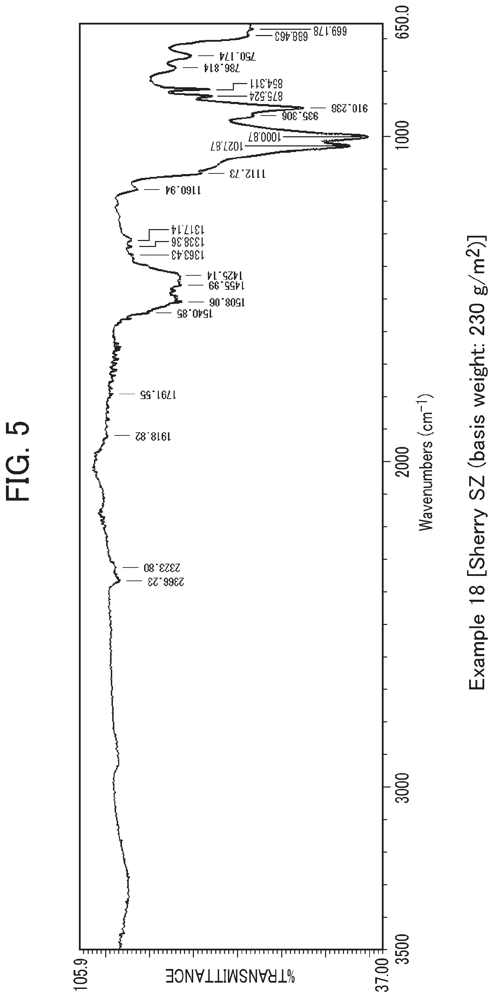

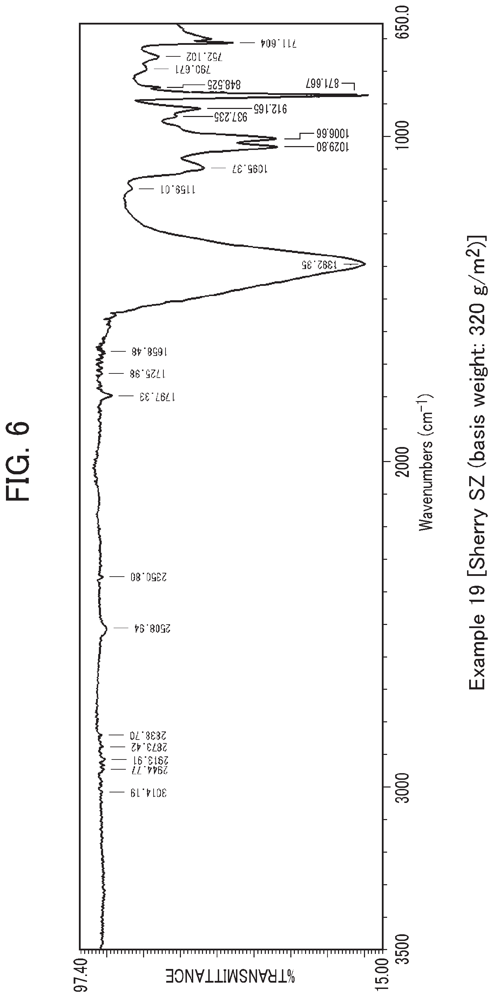

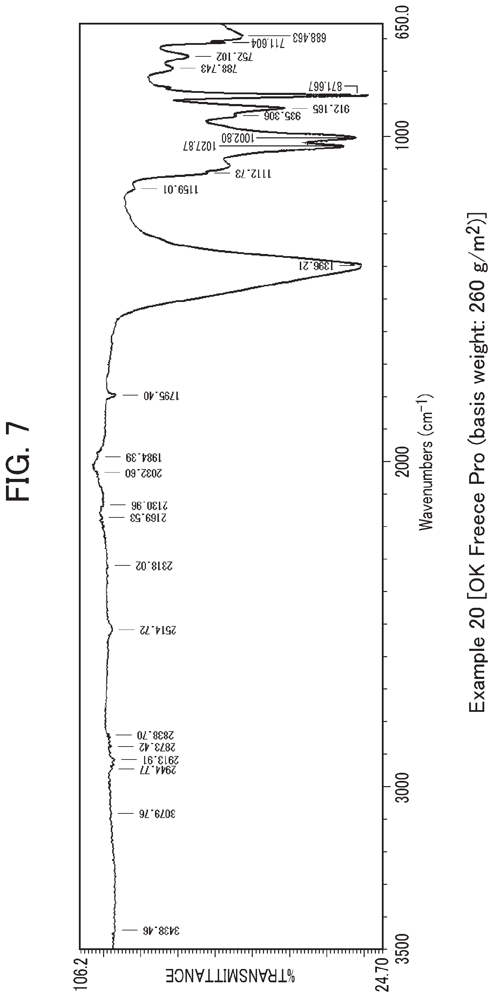

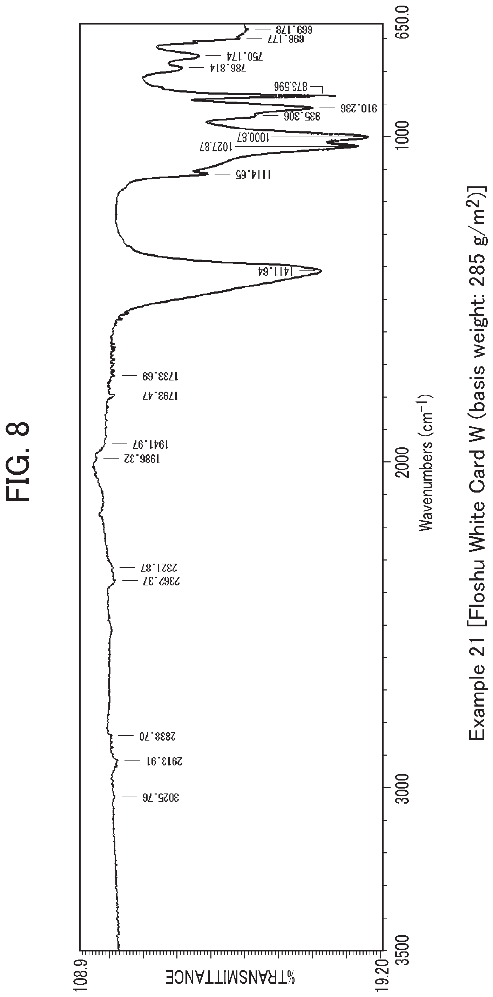

Note that the charts of the infrared absorption spectra (FT-IR) of the surfaces of the paper bases used in Examples 5 and 16 to 21 on which an oil-resistant coating layer is applied are shown in FIG. 2 to FIG. 8. In these FT-IR charts, the absorption peaks observed between 1300 cm⁻¹ and 1600 cm⁻¹ are recognized as indicating the presence of the base coating layer.

Also, water resistance tests of the paper bases used in Examples 5 and 16 to 21 were conducted by confirming the time until full-layer penetration in the water resistance test using the Edgewick method. In the water resistance test using the Edgewick method, the paper base was cut into pieces of 1 cm × 5 cm, water-resistant tape was adhered to both the front and back surfaces of these pieces, and the pieces were immersed in water at room temperature, after which the time until water penetrated through the entire layer was confirmed. The results are collectively shown in Table 2 below.

Note that the evaluation criteria for the water resistance test of the paper base were as follows. Very good (⊙): No full-layer penetration occurred even after 24 hours following immersion. Good (o): No full-layer penetration occurred even after 18 hours following immersion, but full penetration occurred within 24 hours. Fair (Δ): No full-layer penetration occurred even after 12 hours following immersion, but full penetration occurred within 18 hours. Poor (x): Full-layer penetration occurred within 12 hours following immersion.

The oil-resistant packaging materials of Examples 15 to 21 and the papers of Comparative Examples 6 to 9 thus obtained were subjected to "(4-6) Evaluation of Kit Values" in the same manner as in Examples 1 to 8. These results are collectively shown in Table 2 below together with the results of Example 5.

### [Table 2]

**[Table 2]**

| | Substrate | | | | Presence/Absence of Oil-Resistant Coating Layer | Evaluation Results | |
|---|---|---|---|---|---|---|---|
| | Type | Basis Weight (as indicated by manufacturer) (g/m²) | Presence/Absence of The Base Coating Layer Beneath The Oil-Resistant Coating Layer | Water Resistance of Paper Base (Edgewick Method) | | Processability (Bar Coater) | Kit Value |
| Example 5 | S Pearl Card | 260 | Present | ⊚ | Present | ⊚ | ○ |
| Example 16 | S Pearl Card | 310 | Present | ○ | Present | ⊚ | ○ |
| Example 17 | HPS | 230 | Present | × | Present | △ | ○ |
| Example 18 | Sherry SZ | 230 | Present | ⊚ | Present | ⊚ | ○ |
| Example 19 | Sherry SZ | 320 | Present | △ | Present | ⊚ | ○ |
| Example 20 | OK Freece Pro | 260 | Present | × | Present | ○ | ○ |
| Example 21 | Floshu White Card W | 285 | Present | × | Present | △ | ○ |
| Comparative Example 6 | S Pearl Card | 260 | Present | ⊚ | Absent | | × |
| Comparative Example 7 | S Pearl Card | 310 | Present | ○ | Absent | | × |
| Comparative Example 8 | Sherry SZ | 230 | Present | ⊚ | Absent | | × |
| Comparative Example 9 | Sherry SZ | 320 | Present | △ | Absent | | × |

### (10) Adhesion Condition Confirmation Test of Secondary Agent on Roll Surface

In order to confirm the adhesion condition of the secondary agent on the surface of the pickup roll, the following test was conducted. First, a test machine was prepared by removing the backup roll 2 and the paper base 1 from the coating device described in FIG. 1(a). A mirror roll having a roll diameter of 80 mm and a gravure roll having unevenness of 70 diagonal lines were used as the pickup roll 3.

Secondary agents J1 to J7 and secondary agent H1 were placed as the supply liquid 5 in the liquid tank 4. The pickup roll 3 was rotated at three levels of moving speeds of the roll surface of 2 m/min., 5 m/min., and 10 m/min., and the adhesion condition of each secondary agent at each moving speed was confirmed. The results are shown in Table 3 below. The evaluation criteria are as follows. Note that when two evaluations are indicated, it means that the state is intermediate between the respective evaluation indices. Excellent (○+): The secondary agent adhered satisfactorily to the pickup roll. The amount of adhesion was visibly large. Good (o): The secondary agent adhered satisfactorily to the pickup roll. Fair (Δ): Although the secondary agent adhered to the pickup roll, unevenness was confirmed. Poor (x): Repelling was observed on the surface of the pickup roll.

### [Table 3]

**[Table 3]**

| | | | | | | | | | | |
|---|---|---|---|---|---|---|---|---|---|---|
| Type of Pickup Roll | Type of Secondary Agent | | H1 | J1 | J2 | J3 | J4 | J5 | J6 | J7 |
| | Xanthan Gum Content in Secondary Agent (% by mass) | | 0.000 | 0.050 | 0.075 | 0.100 | 0.150 | 0.175 | 0.200 | 0.250 |
| Mirror Roll | Moving Speed of Roll Surface (m/min.) | 2 | × | × | △ | ○ | ○ | ○ | ○+ | ○+ |
| | | 5 | × | × | ○ | ○ | ○ | ○ | ○+ | ○+ |
| | | 10 | × | ×△ | ○ | ○ | ○ | ○ | ○+ | ○+ |
| Gravure Roll (70 Diagonal Lines) | Moving Speed of Roll Surface (m/min.) | 2 | × | ×△ | ○△ | ○ | ○ | ○ | ○△ | ○+ |
| | | 5 | × | ○ | ○ | ○ | ○ | ○ | ○ | ○+ |
| | | 10 | × | ○ | ○ | ○ | ○ | ○ | ○ | ○+ |
| Viscosity of Secondary Agent (mPa·S/25°C) | | | 3 | 16 | 24.4 | 53 | 106.8 | 138 | 174.8 | 300 |

### (10) Discussion of Results of Adhesion Condition Confirmation Test of Secondary Agent on Roll Surface

With the secondary agents J1 to J7 used in the examples, it was possible to adhere the secondary agent to the roll surface by appropriately controlling the moving speed of the roll surface for both the mirror roll and the gravure roll. In particular, J3 to J5, with xanthan gum blending amounts of 0.1 to 0.175% by mass, showed good adhesion under all conditions. Also, the gravure roll showed good adhesion even at a lower concentration of xanthan gum compared to the mirror roll.

### EXPLANATION OF REFERENCE NUMERALS

1: paper base;
2, 2a, 2b: backup rolls;
3: pickup roll;
31: pits;
4: liquid tank;
5: supply liquid;
51: transfer liquid;
52: coating layer

## Claims

1. A two-component oil-resistant coating agent comprising:
a main agent containing at least an alginate; and
a secondary agent containing at least a polyvalent metal salt and xanthan gum.

2. An oil-resistant coating method, comprising:
a main agent coating step of coating a main agent containing at least an alginate on a surface of an object to be treated; and
a secondary agent supply step of supplying a secondary agent containing at least a polyvalent metal salt and xanthan gum to a layer of the main agent coated on the surface of the object to be treated.

3. An oil-resistant packaging material comprising an oil-resistant coating layer on a surface of a paper base, the oil-resistant coating layer comprising a crosslinked body of an alginate by a polyvalent metal and xanthan gum.

4. The oil-resistant packaging material according to claim 3, wherein the paper base has a base coating layer on the surface.

5. An oil-resistant tableware comprising an oil-resistant coating layer on an inner surface that is in contact with contents, the oil-resistant coating layer comprising a crosslinked body of an alginate by a polyvalent metal and xanthan gum.
